(19) Europäisches Patentamt
European Patent Office
Office européen des brevets

(11) Publication number : **0 456 925 B1**

(12) # EUROPEAN PATENT SPECIFICATION

(45) Date of publication of patent specification : **20.10.93 Bulletin 93/42**

(21) Application number : **90305178.7**

(22) Date of filing : **14.05.90**

(51) Int. Cl.$^5$ : **C10M 141/06,** C09K 15/24, // (C10M141/06, 129:10, 129:14, 133:12, 133:52), C10N30:10

(54) **Antioxidant compositions.**

The file contains technical information submitted after the application was filed and not included in this specification

(43) Date of publication of application : **21.11.91 Bulletin 91/47**

(45) Publication of the grant of the patent : **20.10.93 Bulletin 93/42**

(84) Designated Contracting States : **BE DE ES FR GB IT**

(56) References cited :
**EP-A- 0 049 133**
**EP-A- 0 097 118**
**US-A- 3 166 509**
**US-A- 4 011 057**
**US-A- 4 070 304**
**US-A- 4 278 554**
**US-A- 4 306 985**

(73) Proprietor : **ETHYL PETROLEUM ADDITIVES LIMITED**
**London Road**
**Bracknell, Berkshire RG12 2UW (GB)**

(72) Inventor : **Richardson, Clive Ralph**
**1 Headington Close**
**Wokingham, Berks RG11 1TE (GB)**
Inventor : **Scattergood, Roger**
**Froxfield, 10 Grovelands Road**
**Spencers Wood, Reading, Berks RG7 1DP (GB)**
Inventor : **Walters, David Kenvyn**
**7 Firglen Drive, Yateley**
**Camberley, Surrey, GU17 7TR (GB)**

(74) Representative : **Collier, Jeremy Austin Grey et al**
**J.A.Kemp & Co. 14, South Square Gray's Inn**
**London WC1R 5EU (GB)**

EP 0 456 925 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to antioxidant systems and to oleaginous liquids and additive concentrates containing them.

Antioxidants play an important role in the formulation of compounded lubricating oils and functional fluids. They must be capable of providing adequate stabilisation not only to the base oils but also to the complex additive formulations employed in them. And this protection must be conferred over a relatively wide range of temperature conditions likely to be encountered during actual service conditions.

More recently another complicating factor has been added, particularly to the formulation of lubricants such as crankcase lubricants. This is the need to provide effective antioxidant systems which do not cause or contribute to premature deterioration of seals, clutch face plates or other parts made from fluoroelastomers. Contemporary test methods for evaluating fluoroelastomer compatibility of lubricants and functional fluids are the Volkswagen P.VW 3334 Seal Test, the CCMC Viton Seal Test (CEL L-39-T-87 Oil/Elastomer Compatibility Test), and the VITON seal test in accordance with the TO-3 Caterpillar Specification.

Another important factor which must be taken into consideration is the cost-effectiveness of any given antioxidant system. It is usually desirable from the effectiveness standpoint to utilize a combination of antioxidants of different chemical structures. In this way, various antioxidant components, which perhaps function by different mechanisms, are available to exert their effectiveness under a variety of service conditions. However, complex mixtures requiring the purchase (or production), storage and use of a multiplicity of antioxidants (see for example the system described in European Patent Specification Publication No. 0049133) tend to add substantially to the costs and complexities of lubricant blending operations.

We have discovered that it is possible to achieve both adequate antioxidant protection and adequate fluoroelastomer compatibility by use of particular antioxidant combinations which, although chemically complex, are highly efficient from the cost-effectiveness standpoint. At most, the systems of this invention require a combination of three basic types of antioxidants.

In accordance with this invention there is provided an antioxidant composition which comprises a combination of (i) at least one oil-soluble mononuclear monohydric phenol having a tertiary alkyl group in at least one position ortho to the hydroxyl group and a hydrogen atom or a tertiary alkyl group in the position para to the hydroxyl group, (ii) at least one oil-soluble methylene-bridged tertiary alkyl-substituted polyphenol, and (iii) at least one oil-soluble aromatic secondary amine, the proportions of (i), (ii) and (iii) being such that the weight percentage of nitrogen in component (iii) relative to the total weight of components (i), (ii) and (iii) is in the range of 0.1% to 0.8%, and the weight ratio of monohydric phenols:methylene-bridged polyphenols in the composition is in the range of 15:1 to 1:2. Preferably component (i) in the foregoing composition is an oil-soluble mixture of said mononuclear monohydric phenols. It is likewise preferred that component (ii) of the foregoing composition be an oil-soluble mixture of said methylene-bridged tertiary alkyl-substituted phenols.

In one of its more preferred embodiments, this invention provides an antioxidant composition which comprises a combination of (i) an oil soluble mixture of sterically-hindered tertiary alkylated monohydric phenols, (ii) an oil-soluble mixture of sterically-hindered tertiary alkylated methylene-bridged polyphenols, and (iii) at least one oil-soluble aromatic secondary amine, the proportions of (i), (ii) and (iii) being such that the weight percentage of nitrogen in component (iii) relative to the total weight of components (i), (ii) and (iii) is in the range of 0.1 to 0.8%, and preferably in the range of 0.3% to 0.7%, and the weight ratio of monohydric phenols:methylene-bridged polyphenols in the composition is in the range of 15:1 to 1:2, preferably in the range of 10:1 to 1:1, and most preferably in the range of 5:1 to 1:1.

Another embodiment of this invention is a lubricating oil or functional fluid composition containing a minor antioxidant quantity of an antioxidant combination of this invention such as those described above. Preferred embodiments of this type are the lubricating oil or functional fluid compositions which are further characterised by satisfying the fluoroelastomer compatibility requirements of the Volkswagen P.VW 3334 Seal Test, or the CCMC Viton Seal Test, or the VITON seal compatibility test in accordance with the Caterpillar TO-3 Specification, or the fluoroelastomer compatibility requirements of all such tests.

The Volkswagen P.VW 3334 Seal Test involves keeping a test specimen of fluoroelastomer (VITON AK6) in an oil blend at 150°C for 96 hours and then comparing both the change in elongation to break and the tensile strength of the test specimen to the corresponding properties of a fresh specimen of the same fluoroelastomer. The exposed test specimen is also examined for the presence of cracks. In these tests, a lubricant passes the test if the exposed test specimen exhibits a change in elongation to break (as compared to an untested specimen) of no more than -25% and a tensile strength (as compared to an untested specimen) of no more than -20%, and possesses no cracks. Another test which can be used to measure the effect of lubricant additives on fluoroelastomers is the CCMC Viton Seal Test, CEC L-39-T-87 Oil/Elastomer Compatibility Test. This test is similar to the VW Test except that it is a 7-day test rather than a 4-day test, the elastomer is VITON RE I,

and the pass/fail points are -50% tensile strength and -60% elongation. The VITON seal test in accordance with the TO-3 Caterpillar Specification requires that the difference in elongation of the VITON fluoroelastomer test pieces before and after exposure to an oil blend in the test less the difference in elongation of control fluoroelastomer test pieces before and after exposure under the same conditions to a standard reference oil not exceed -10%. In other words, a -11% change represents a failure.

Yet another embodiment of this invention is an additive concentrate composition containing a minor antioxidant quantity of an antioxidant combination of this invention such as described above. Preferred embodiments of this type are the additive concentrates which are further characterised by providing when dissolved in an oleaginous liquid at a given concentration falling in the range of up to 20% by weight based on the total weight of the oleaginous liquid plus the concentrate, a lubricating oil or functional fluid composition satisfying the fluoroelastomer compatibility requirements of the Volkswagen P.VW 3334 Seal Test, or the CCMC Viton Seal Test, or the VITON seal compatibility test of the Caterpillar TO-3 specification, or the fluoroelastomer compatibility requirements of all such tests.

Additional embodiments of this invention comprise oleaginous compositions and additive concentrates which contain in addition to an antioxidant combination composed of components (i), (ii) and (iii), at least one ashless dispersant, preferably a nitrogen-containing ashless dispersant, most preferably an alkyl- or alkenyl-substituted succinimide.

Still other embodiments of this invention include:

(1) a method of lubricating mechanical parts with a lubricating oil containing an antioxidant in the presence of at least one fluoroelastomer surface, said method characterised in that the lubrication is performed with a lubricating oil containing a minor antioxidant quantity of an antioxidant combination of this invention;

(2) a method as in (1) above wherein said lubricating oil additionally includes at least one ashless dispersant;

(3) a combination which comprises a mechanical mechanism containing moving parts to be lubricated, a lubricating oil composition for lubricating such parts, and a polyfluoroelastomer in contact with at least a portion of such lubricating oil composition, characterised in that the lubricating oil composition for effecting such lubrication contains a minor antioxidant quantity of an antioxidant combination of this invention; and

(4) a combination as in (3) above wherein said lubricating oil additionally includes at least one ashless dispersant.

Components (i), (ii) and (iii) are each known antioxidants which have been used or suggested for use in lubricating oils. For example, a considerable number of sterically-hindered tertiary-alkylated monohydric phenols suitable for use as component (i) materials in the practise of this invention are described in U.S. Pat. No. 3,166,509. U.S. Pat. Nos. 2,944,086; 3,043,775 and 3,211,652 describe a number of methylene-bridged tertiary alkyl polyphenols which are suitable for use as component (ii). And some of the compounds useful as component (iii) are referred to in U.S. Pat. No. 3,923,672. However the results obtainable by the practise of this invention are not achievable with the lubricant compositions referred to in these prior disclosure.

<u>Component (i).</u> The tertiary alkylated monohydric phenols utilised as component (i) are characterised in that at least one of the ortho positions of the phenol is occupied by a tertiary alkyl group and the para position is occupied either by a tertiary alkyl group or by a hydrogen atom. The tertiary alkyl group in the ortho position (and optionally in the para position) contains from 4 to 12 carbon atoms, and is most preferably a tertiary butyl group. The other ortho position may carry a hydrogen atom or a hydrocarbyl substituent, preferably an alkyl group of up to 12 carbon atoms. Such tertiary alkylated monohydric phenols can be and preferably are prepared by reacting phenol, or one or more ortho-hydrocarbyl phenols, or a mixture of phenol and one or more ortho-hydrocarbyl phenols with a suitable olefin such as isobutene, diisobutylene, etc., using an ortho-alkylation catalyst such as an aluminum phenoxide catalyst, as disclosed for example in U.S. Pat. No. 2,831,898.

The preferred component (i) mixtures are those which are liquids at 25°C. A preferred example of such liquid mixtures is typically composed of approximately 75.7% 2,6-di-tert-butylphenol, 7.4% 2-tert-butylphenol, 12.2% 2,4,6-tri-tert-butylphenol, and 4.7% 2,4-di-tert-butylphenol and other phenolic components.

Other suitable mixtures include the following (percentages by weight):

a) 75% 2,6-di-tert-butylphenol
   12% 2-tert-butylphenol
   13% 2,4,6-tri-tert-butylphenol

b) 75% 2,6-di-tert-butylphenol
   15% 2-tert-butylphenol
   10% 2,4,6-tri-tert-butylphenol

c) 75% 2,6-di-tert-butylphenol
   10% 2-tert-butylphenol
   15% 2,4,6-tri-tert-butylphenol

d) 72% 2,6-di-tert-butylphenol
15% 2-tert-butylphenol
13% 2,4,6-tri-tert-butylphenol

e) 69% 2,6-di-tert-butylphenol
16% 2-tert-butylphenol
15% 2,4,6-tri-tert-butylphenol

f) 65% 2,6-di-tert-butylphenol
25% 2-tert-butylphenol
10% 2,4,6-tri-tert-butylphenol

g) 80% 2,6-di-tert-butylphenol
5% 2-tert-butylphenol
15% 2,4,6-tri-tert-butylphenol

h) 60% 2,6-di-tert-butylphenol
30% 2-tert-butylphenol
3% 2,4,6-tri-tert-butylphenol
7% other phenolic compounds

i) 68% 2,6-di-tert-butylphenol
19% 2-tert-butylphenol
9% 2,4,6-tri-tert-butylphenol
4% other phenolic compounds

j) 62% 2,6-di-tert-butylphenol
25% 2-tert-butylphenol
5% 2,4,6-tri-tert-butylphenol
8% other phenolic compounds

k) 70% 2,6-di-tert-butylphenol
15% 2-tert-butylphenol
11% 2,4,6-tri-tert-butylphenol
4% other phenolic compounds

l) 40% 2,6-di-(1,1,3,3-tetramethylbutyl)phenol
60% 2-(1,1,3,3-tetramethylbutyl)phenol

Thus in general, component (i) comprises a tertiary alkylated phenol (and preferably at least two, and most preferably at least three, different tertiary alkylated phenols) of the general formula:

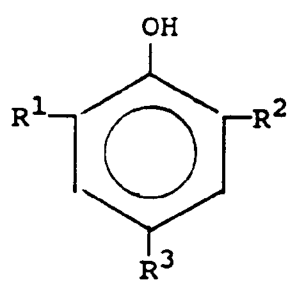

wherein $R^1$ is a tertiary alkyl group of 4 to 12 carbon atoms; $R^2$ is a hydrogen atom or an alkyl group of 1 to 12 carbon atoms; and $R^3$ is a hydrogen atom or a tertiary alkyl group of 4 to 12 carbon atoms. Preferably, $R^2$ is a hydrogen atom or a methyl, ethyl, isopropyl, or tert-butyl group, and preferably $R_3$ is a hydrogen atom or a tertiary alkyl group of up to 8 carbon atoms. Most preferably $R_1$ is a tertiary butyl group, $R_2$ is a hydrogen atom or a methyl or tertiary butyl group, and $R_3$ is a hydrogen atom or tert-butyl group.

Component (ii). The methylene-bridged tertiary alkyl polyphenols utilised in the compositions of this invention are typified by such compounds as 4,4'-methylenebis(2,6-di-tert-butylphenol), 4,4'-methylenebis(2-methyl-6-tert-butylphenol), 4,4'-methylenebis[2,6-di-(1,1,2-trimethylpropyl)phenol], 4,4'-methylenebis[2-methyl-6-(1,1,2-trimethylpropyl)phenol), 4,4'-methylenebis[2,6-di-(1,1,3,3-tetramethylbutyl)phenol], 2,2'-methylenebis(4,6-di-tert-butylphenol), 2,2'-methylenebis(4-methyl-6-tert-butylphenol), 2,2'-methylenebis(4-ethyl-6-tert-butylphenol), and 2,2'-methylenebis[4,6-di-(1,1,2-trimethylpropyl)phenol].

In order to achieve high oil-solubility in a highly cost-effective manner, it is preferred to use as component (ii) a mixture of sterically-hindered tertiary alkyl-substituted methylene-bridged polyphenols. Such mixtures can be formed by reacting a mixture comprising at least one 2,6-di-tert-alkylphenol and at least one 2-tert-alkylphenol with formaldehyde or a formaldehyde-generating reagent (e.g. paraformaldehyde) in the presence

of a suitable catalyst, preferably a strong inorganic base such as KOH or NaOH. Processes of this type are described for example in U.S. Pat. No. 3,211,652.

A particularly preferred mixture of this type is formed by using as the phenolic reactant a mixture of a 2-tert-alkylphenol (most preferably, 2-tert-butylphenol) and a 2,6-di-tert-alkylphenol (most preferably, 2,6-di-tert-butylphenol). The product formed on reaction of this mixture with formaldehyde in the presence of a strong base is composed principally of

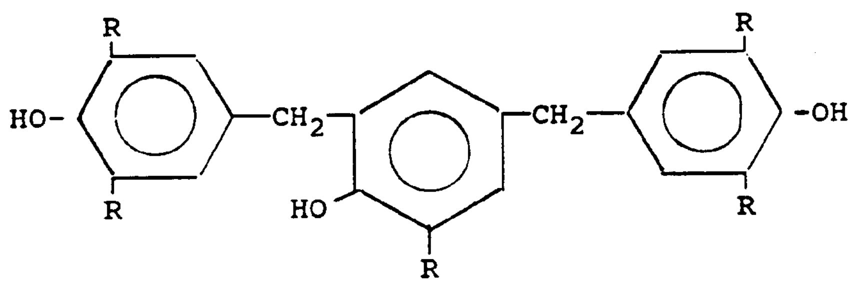

and

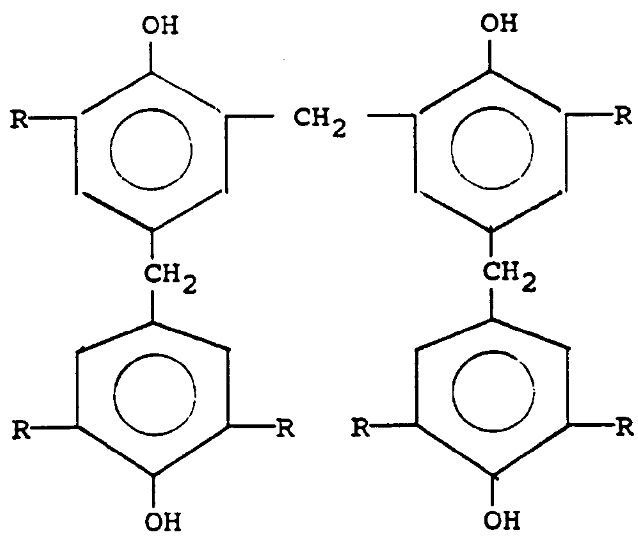

wherein R is a tertiary alkyl group (most preferably tertiary butyl). The mixture also contains a minor amount of other components such as 4,4'-methylenebis(2,6-dialkylphenol).

Components (i) and (ii) in the form of preferred multi-component mixtures can be co-produced, if desired. This is accomplished by first performing a phenol orthoalkylation reaction as in U.S. Pat. No. 2,831,898 to form a product enriched in 2-tert-butylphenol and 2,6-di-tert-butylphenol. Thereupon after removing the catalyst residues the product is reacted with formaldehyde or a formaldehyde-generating reagent in the presence of a strong base such as KOH or NaOH. The resultant product thus comprises a mixture of components (i) and (ii). If desired, the initial orthoalkylation reaction may be performed using a mixture of monohydric phenols such as a mixture of phenol and o-cresol, a mixture of phenol and o-ethylphenol, a mixture of phenol and o-tert-butylphenol, and the like.

Component (iii). In principle, any oil-soluble aromatic secondary amine or mixture of such compounds can be used as component (iii). Whilst aromatic secondary monoamines are preferred, aromatic secondary polyamines are also suitable. Illustrative aromatic secondary monoamines include diphenylamine, alkyl diphenylamines containing 1 or 2 alkyl substituents each having up to about 16 carbon atoms, phenyl-α-naphthylamine, phenyl-β-naphthylamine, alkyl- or aralkyl-substituted phenyl-α-naphthylamine containing 1 or 2 alkyl or aralkyl groups each having up to about 16 carbon atoms, alkyl- or aralkyl-substituted phenyl-β-naphthylamine containing 1 or 2 alkyl or aralkyl groups each having up to about 16 carbon atoms, and similar compounds.

Typical aromatic secondary polyamines include N,N'-diethyl-p-phenylenediamine, N,N'-di-sec-butyl-p-phenylenediamine, N,N'-di-2-ethylhexyl-p-phenylenediamine, N,N'-dimethyl-o-phenylenediamine, 4-(methylamino)diphenylamine, 4-(ethylamino)-diphenylamine, 4-(isopropylamino)diphenylamine, 2-methylaminodiphenylamine, and analogous compounds having 1 or 2 alkyl or aralkyl substituents on the aromatic nucleus, each containing up to 16 carbon atoms. In order to facilitate blending operations, component (iii) is preferably a ring-alkylated diphenylamine that is in the liquid state at 25°C. Methods for the production of such compounds from diphenylamine and olefins are set forth, for example, in GB Pat. Specification No. 1,332,201 and in U.S. Pat. No. 4,824,601.

A preferred material for use as component (iii) is an alkylated diphenylamine of the general formula

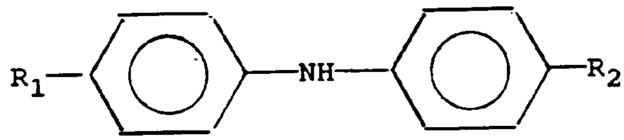

wherein $R_1$ is an alkyl group (preferably a branched alkyl group) having 8 to 12 carbon atoms, (more preferably 8 or 9 carbon atoms) and $R_2$ is a hydrogen atom or an alkyl group (preferably a branched alkyl group) having 8 to 12 carbon atoms, (more preferably 8 or 9 carbon atoms). Most preferably, $R_1$ and $R_2$ are the same. One such preferred compound is available commercially as Naugalube 438L, a material which is understood to be predominantly a 4,4'-dinonyldiphenylamine (i.e., bis(4-nonylphenyl)amine) wherein the nonyl groups are branched.

A feature of this invention is that antioxidant components other than components (i), (ii) and (iii), although permissible, are not required. Thus the advantages of this invention can be achieved in a highly cost-effective manner. When used to stabilise crankcase lubricants, the fact that ancillary antioxidant components such as phosphite esters are not required is of considerable advantage above and beyond cost-effectiveness considerations. In particular, many crankcase lubricants are formulated to contain various phosphorus additives such as zinc dithiophosphates at levels of 0.1% phosphorus. At least one original equipment manufacturer currently specifies that for factory-fill applications, the lubricant can contain at most no more than 0.11% phosphorus. Compliance with such specifications could prove difficult, if not impossible, to accomplish in such lubricants if a phosphite ester were required in order to achieve satisfactory antioxidant protection.

In forming the lubricant and functional fluid compositions of this invention, components (i), (ii) and (iii) can be separately blended into the oil in any sequence, or they can be blended in the form of mixtures of any two or all three such components. If desired these components can be premixed in a suitable inert diluent such as a 100 solvent neutral mineral oil and introduced into the base lubricant or functional fluid in this form. Preferably, however, the components are pre-blended with other additives used in formulating additive concentrates as their presence in the concentrate affords antioxidant protection to such composition and, additionally simplifies the lubricant blending operation.

Among the features of this invention is the fact that certain combinations of components (i), (ii) and (iii) can provide compositions which are liquid at ambient temperatures. For example, the following composition, in which all parts and percentages are by weight, was found to be a liquid at ambient temperatures:

Component (i)

6 parts of a mixture comprising approximately 75.7% 2,6-di-tert-butylphenol, 7.4% 2-tert-butylphenol, 12.2% 2,4,6-tri-tert-butylphenol and 4.7% 2,4-di-tert-butylphenol and other phenolic components;

Component (ii)

1.5 parts of methylene-bridged tertiary butyl polyphenols (formed by reacting a mixture of 2,6-di-tert-butylphenol and 2-tert-butylphenol with formaldehyde in the presence of KOH); and

Component (iii)

1.5 parts of bis(nonylphenyl)amine.

In contrast, the following mixtures, which are devoid of component (i), are solids at ambient temperatures:

Product A

Component (ii)

7.5 parts of methylene-bridged tertiary butyl polyphenols (formed by reacting a mixture of 2,6-di-tert-butylphenol and 2-tert-butylphenol with formaldehyde in the presence of KOH); and

Component (iii)

1.5 parts of bis(nonylphenyl)amine.

Product B

Component (ii)

7.5 parts of 4,4'-methylenebis(2,6-di-tert-butylphenol); and

Component (iii)

1.5 parts of bis(nonylphenyl)amine.

Product B remained a solid even when heated to 70°C.

Similarly, the following product, devoid of component (ii) although initially a liquid, reverted to the solid state after standing at room temperature for 5 days:

Product C

Component (i)

7.5 parts of 2,6-di-tert-butylphenol; and

Component (iii)

1.5 parts of bis(nonylphenyl)amine.

Another feature of this invention is that when components (i) and (ii) are both appropriate mixtures of individual compounds, the resultant compositions cannot only exist as liquids at ambient temperatures but can remain free of sediment or crystallised solid formation during storage. Such compositions are especially preferred. These advantageous properties were manifested for example in a composition composed by weight of:

Component (i)

6 parts of a mixture comprising approximately 75.7% 2,6-di-tert-butylphenol, 7.4% 2-tert-butylphenol, 12.2% 2,4,6-tri-tert-butylphenol and 4.7% 2,4-di-tert-butylphenol and other phenolic components;

Component (ii)

1.5 parts of methylene-bridged tertiary butyl polyphenols (formed by reacting a mixture of 2,6-di-tert-butylphenol and 2-tert-butylphenol with formaldehyde in the presence of KOH); and

Component (iii)

1.5 parts of bis(nonylphenyl)amine.

This product, a liquid at ambient temperature, exhibited only a slight haze after standing for 5 days at room temperature. In contrast, a corresponding mixture in which component (i) was 2,6-di-tert-butylphenol and component (ii) was 4,4'-methylenebis(2,6-di-tert-butylphenol), contained a heavy deposit of crystalline solids in the liquid product after 5 days of storage. Thus when utilising the less preferred compositions of this invention as exemplified by this latter composition, it is desirable to use the product promptly after its formation. In this way, problems due to solids formation during storage can be alleviated.

Ordinarily the lubricants and functional fluids of this invention will contain from 0.01% to 2.7% (based on the total weight of the composition) of an antioxidant combination of this invention, although greater or lesser concentrations can be used whenever deemed necessary or appropriate. Preferably, such oleaginous compositions will contain an amount of antioxidant combination of this invention falling in the range of 0.1% to 2.7%, more preferably in the range of 0.5% to 2.0%, and most preferably in the range of 0.5 to 1.5%, based on the total weight of the compositions.

Preferred antioxidant compositions of this invention are composed of (i) an oil soluble mixture of at least three different sterically-hindered tertiary butylated monohydric phenols, (ii) an oil-soluble mixture of at least three sterically-hindered tertiary butylated methylene-bridged polyphenols formed by reacting formaldehyde with a mixture comprising 2-tert-butylphenol and 2,6-di-tert-butylphenol in the presence of a strong base, and (iii) at least one bis(4-alkylphenyl)amine wherein the alkyl group is a branched alkyl group having 8 to 12 carbon atoms (most preferably 8 or 9 carbon atoms), the proportions of (i), (ii) and (iii) on a weight basis fall in the range of 2.5 to 10.5 parts of component (i), and 0.5 to 2.0 parts of component (ii) per part by weight of component (iii). Preferably the proportions of (i), (ii) and (iii) on a weight basis fall in the range of 3.0 to 7.5 parts of component (i), and 0.7 to 1.5 parts of component (ii) per part by weight of component (iii). The proportions of (i), (ii) and (iii) on a weight basis most preferably fall in the range of 3.5 to 5.0 parts of component (i), and 0.9 to 1.2 parts of component (ii) per part by weight of component (iii). Preferred lubricant and functional fluid compositions of this invention contain these particular components in amounts on a weight basis falling within the range of 0.25 to 2.10% of component (i), 0.05 to 0.40% of component (ii), and 0.10 to 0.20% of component (iii).

The following examples are presented for purposes of illustration and not limitation. Examples 1-8 typify antioxidant combinations of this invention. Lubricant and functional fluid compositions containing antioxidant

combinations of this invention are illustrated in Examples 9-16. Reference in the examples to methylene-bridged phenolic compounds designates a mixture such as described above formed by reacting a mixture of 2,6-di-tert-butylphenol and 2-tert-butylphenol with formaldehyde in the presence of a strong base.

EXAMPLE 1

| Components | Percent by Weight |
|---|---|
| 2,6-Di-tert-butylphenol | 57.1 |
| 2,4,6-Tri-tert-butylphenol | 9.5 |
| 2-Tert-butylphenol | 5.7 |
| Methylene-bridged tert-butylated phenols | 6.7 |
| Other mononuclear phenolic compounds | 4.8 |
| Bis(nonylphenyl)amine | 9.5 |
| Inert diluent | 6.7 |

EXAMPLE 2

| Components | Percent by Weight |
|---|---|
| 2,6-Di-tert-butylphenol | 50.5 |
| 2,4,6-Tri-tert-butylphenol | 8.6 |
| 2-Tert-butylphenol | 4.8 |
| Methylene-bridged tert-butylated phenols | 10.5 |
| Other mononuclear phenolic compounds | 4.8 |
| Bis(nonylphenyl)amine | 9.5 |
| Inert diluent | 11.4 |

EXAMPLE 3

| Components | Percent by Weight |
|---|---|
| 2,6-Di-tert-butylphenol | 43.8 |
| 2,4,6-Tri-tert-butylphenol | 6.7 |
| 2-Tert-butylphenol | 3.8 |

| | |
|---|---|
| Methylene-bridged tert-butylated phenols | 15.2 |
| Other mononuclear phenolic compounds | 4.8 |
| Bis(nonylphenyl)amine | 9.5 |
| Inert diluent | 16.2 |

EXAMPLE 4

| Components | Percent by Weight |
|---|---|
| 2,6-Di-tert-butylphenol | 50.8 |
| 2,4,6-Tri-tert-butylphenol | 7.8 |
| 2-Tert-butylphenol | 4.4 |
| Methylene-bridged tert-butylated phenols | 15.0 |
| Other mononuclear phenolic compounds | 5.5 |
| Bis(nonylphenyl)amine | 16.6 |

EXAMPLE 5

| Components | Percent by Weight |
|---|---|
| 2,6-Di-tert-butylphenol | 64.8 |
| 2,4,6-Tri-tert-butylphenol | 8.6 |
| Methylene-bridged tert-butylated phenols | 6.7 |
| 2,4-Di-tert-butylphenol & other mononuclear phenolic compounds | 3.8 |
| Bis(nonylphenyl)amine | 9.5 |
| Inert diluent | 6.7 |

EXAMPLE 6

| Components | Percent by Weight |
|---|---|
| 2,6-Di-tert-butylphenol | 48.6 |
| 2,4,6-Tri-tert-butylphenol | 6.7 |
| Methylene-bridged tert-butylated phenols | 12.9 |
| 2,4-Di-tert-butylphenol & other mononuclear phenolic compounds | 3.8 |
| Bis(nonylphenyl)amine | 14.3 |
| Inert diluent | 13.8 |

EXAMPLE 7

| Components | Percent by Weight |
|---|---|
| 2,6-Di-tert-butylphenol | 48.2 |
| 2,4,6-Tri-tert-butylphenol | 7.4 |
| 2-Tert-butylphenol | 4.2 |
| Methylene-bridged tert-butylated phenols | 14.2 |
| Phenyl-α-naphthylamine | 7.2 |
| Inert diluent | 18.8 |

EXAMPLE 8

| Components | Percent by Weight |
|---|---|
| 2-Methyl-6-tert-butylphenol | 70.4 |
| 4,4'-Methylenebis(2,6-di-tert-butylphenol) | 10.5 |
| 4-(Isopropylamino)diphenylamine | 2.4 |
| Inert diluent | 16.7 |

EXAMPLE 9

Mineral lubricating oil containing 2,6-di-tert-butylphenol (0.6%), 2,4,6-tri-tert-butylphenol (0.1%), 2-tert-butylphenol and minor amounts of other mononuclear phenolic species (0.1%), methylene-bridged tert-butylated phenols (0.07%), and bis(nonylphenyl)amine (0.1%).

EXAMPLE 10

Mineral lubricating oil containing 2,6-di-tert-butylphenol (0.53%), 2,4,6-tri-tert-butylphenol (0.09%), 2-tert-butylphenol and minor amounts of other mononuclear phenolic species (0.09%), methylene-bridged tert-butylated phenols (0.11%), and bis(nonylphenyl)amine (0.1%).

EXAMPLE 11

Mineral lubricating oil containing 2,6-di-tert-butylphenol (0.45%), 2,4,6-tri-tert-butylphenol (0.07%), 2-tert-butylphenol and minor amounts of other mononuclear phenolic species (0.09%), methylene-bridged tert-butylated phenols (0.16%), and bis(nonylphenyl)amine (0.1%).

EXAMPLE 12

Mineral lubricating oil containing 2,6-di-tert-butylphenol (0.46%), 2,4,6-tri-tert-butylphenol (0.07%), 2-tert-butylphenol and minor amounts of other mononuclear phenolic species (0.09%), methylene-bridged tert-butylated phenols (0.14%), and bis(nonylphenyl)amine (0.15%).

EXAMPLE 13

Mineral lubricating oil containing 2,6-di-tert-butylphenol (0.68%), 2,4,6-tri-tert-butylphenol (0.09%), 2-tert-butylphenol and minor amounts of other mononuclear phenolic species (0.04%), methylene-bridged tert-butylated phenols (0.07%), and bis(nonylphenyl)amine (0.1%).

EXAMPLE 14

Mineral lubricating oil containing 2,6-di-tert-butylphenol (0.51%), 2,4,6-tri-tert-butylphenol (0.07%), 2-tert-butylphenol and other mononuclear phenolic species (0.04%), methylene-bridged tert-butylated phenols (0.14%), and bis(nonylphenyl)amine (0.15%).

EXAMPLE 15

Didodecyl adipate containing 2,6-di-tert-butylphenol (0.46%), 2,4,6-tri-tert-butylphenol (0.07%), 2-tert-butylphenol and minor amounts of other mononuclear phenolic species (0.09%), methylene-bridged tert-butylated phenols (0.14%), and bis(nonylphenyl)amine (0.15%).

EXAMPLE 16

Rapeseed oil containing 2,6-di-tert-butylphenol (0.32%), 2-tert-butylphenol (0.30%), 4,4'-methylenebis-(2,6-di-tert-butylphenol) (0.14%), and 4-(isopropylamino)-diphenylamine (0.04%).

In order to demonstrate the antioxidant protection that can be secured by use of antioxidant combinations of this invention, a series of finished crankcase lubricating oils were formulated. Each such oil containing, in addition to an antioxidant combination of this invention, conventional amounts of succinimide ashless dispersant, overbased sulfonates, zinc dialkyl dithiophosphate, viscosity index improver, rust inhibitor, and antifoam agent to provide an SAE 15W-40 crankcase lubricating oil. The resultant lubricant compositions were subjected to the conditions of the standard 96-hour Hot Oil Oxidation Test (HOOT). The makeup and concentrations of the antioxidant combinations used in these tests and the results in terms of percent viscosity increase incurred during the tests are shown in Table I.

Table I - Hot Oil Oxidation Tests

| Oil No. | Antioxidant Composition Used | Viscosity Increase, % |
|---|---|---|
| Compositions of This Invention | | |
| 1 | Example 9 | 921* |
| 2 | Example 10 | 1130 |
| 3 | Example 11 | 1110 |
| 4 | Example 12 | 615* |
| 5 | Example 13 | 1115 |
| 6 | Example 14 | 468 |
| Compositions Not of This Invention | | |
| 7 | Mix A** | Too Viscous to Measure |
| 8 | Mix B** | Too Viscous to Measure |
| 9 | Mix C** | 974 |

- - - - -

* Average of 2 runs

** Mix A = 0.43% methylene-bridged tert-butylated phenols, 0.06% mononuclear phenolic species, and 0.05% bis(nonylphenyl)amine; Mix B = 0.45% methylene-bridged tert-butylated phenols and 0.07% mononuclear phenolic species; Mix C = 0.34% methylene-bridged tert-butylated phenols, 0.05% mononuclear phenolic species, and 0.25% bis(nonylphenyl)amine.

An evaluation was made of the performance of a fully formulated SAE 15W-40 crankcase lubricating oil containing an antioxidant combination of this invention using standard Sequence III-E engine tests. For comparative purposes a fully formulated SAE 15W-40 crankcase lubricating oil containing the same concentration of a prior, commercially used crankcase lubricating oil antioxidant was also subjected to this test procedure. Except for the antioxidant systems employed, the two lubricants were otherwise identical. Table II sets forth the oil viscosity change data from these tests. Test results on sludge, varnish and deposits are presented in Table III.

Table II - Sequence III-E
Test Results on Oil Viscosity Changes

| | This Invention | | Not of This Invention | |
|---|---|---|---|---|
| Hours | Viscosity | Viscosity Change, % | Viscosity | Viscosity Change, % |
| Start | 96.2 | -- | 98.2 | -- |
| 6 | 110.5 | 15 | 115.3 | 17 |
| 16 | 118.9 | 24 | 125.4 | 28 |
| 24 | 124.9 | 30 | 132.3 | 35 |
| 32 | 128.9 | 34 | 136.9 | 39 |
| 40 | 141.2 | 47 | 156.7 | 60 |
| 48 | 172.3 | 79 | 195.7 | 99 |
| 56 | 211.1 | 119 | 251.3 | 156 |
| 64 | 256.9 | 167 | 312.8 | 219 |

Table III - Sequence III-E Tests
Sludge, Varnish and Deposits

| Rating | This Invention | Not of This Invention |
|---|---|---|
| Average Sludge | 9.46 | 9.48 |
| Average Varnish | 9.02 | 8.86 |
| Oil Ring Land Deposits | 7.23 | 5.68 |

As noted above, it is possible by use of suitable formulated antioxidant combinations of this invention to provide finished lubricants exhibiting good compatibility towards fluoroelastomers with which they may come in contact during actual service conditions. Indeed, the most preferred antioxidant combinations of this invention are those capable of satisfying the fluoroelastomer compatibility test requirements of at least one of the following tests: the Volkswagen P.VW 3334 Seal Test, the CCMC Viton Seal Test (CEL L-39-T-87 Oil/Elastomer Compatibility), and the VITON seal test in accordance with the TO-3 Caterpillar Specification. For example, Oil No. 4 above, when subjected to the VW seal test using Viton AK6 fluoroelastomer, gave an elongation change of -16.4% and a change in tensile strength of -14.2%, both of which are well within the test specification limits of ± 25% and ± 20%, respectively. Also there were no cracks in the test specimens. It is of interest to note that the same finished lubricating oil containing a prior art, commercially used antioxidant mixture (but which finished lubricating oil was otherwise identically formulated) did not satisfy these test specification limits. In particular, the finished lubricating oil not of this invention gave an elongation change of -23.4% and a change in tensile strength of -23.5%, the latter value falling outside of the test specification limit of ± 20%. It will also be noted that the differences in the elongation changes as between the oil of this invention and the oil not of this invention amounted to an improvement of 6.9% for the oil of this invention. Similarly, the oil of this invention gave an improvement of 9.3% in tensile strength change as compared to the oil not of this invention.

In another group of VW seal tests using Viton AK6 fluoroelastomer, the following antioxidant compositions were evaluated in a fully formulated lubricating oil of the type described above:

Composition A composed of: (i) 6 parts of a mixture comprising approximately 75.7% 2,6-di-tert-butylphenol, 7.4% 2-tert-butylphenol, 12.2% 2,4,6-tri-tert-butylphenol and 4.7% 2,4-di-tert-butylphenol and other phenolic components; (ii) 1.5 parts of methylene-bridged tertiary butyl polyphenols (formed by reacting a mixture of 2,6-di-tert-butylphenol and 2-tert-butylphenol with formaldehyde in the presence of KOH); and (iii) 1.5 parts of bis(nonylphenyl)amine.

Composition B composed of: (ii) 7.5 parts of methylene-ridged tertiary butyl polyphenols (formed by reacting a mixture of 2,6-di-tert-butylphenol and 2-tert-butylphenol with formaldehyde in the presence of KOH); and (iii) 1.5 parts of bis(nonylphenyl)amine.

Composition C composed of: (i) 6 parts of a mixture comprising approximately 75.7% 2,6-di-tert-butylphenol, 7.4% 2-tert-butylphenol, 12.2% 2,4,6-tri-tert-butylphenol and 4.7% 2,4-di-tert-butylphenol and other phenolic components; and (iii) 1.5 parts of bis(nonylphenyl)amine.

The results of these tests were as follows:

| Composition | Elongation Change, % | Tensile Strength Change, % | Cracking |
|---|---|---|---|
| A | -16.3 | -16.2 | None |
| B | -18.2 | -18.7 | None |
| C | -21.1 | -19.9 | None |

It will be seen that composition A, a preferred composition of this invention, exhibited greater compatibility toward the fluoroelastomer than did either of compositions B and C.

The antioxidant combinations utilised according to the invention can be incorporated in a wide variety of lubricants. They can be used in lubricating oil and functional fluid compositions, such as automotive crank-case lubricating oils, automatic transmission fluids, gear oils, hydraulic oils, cutting oils, etc. The lubricant may be a mineral oil, a synthetic oil, a natural oil such as a vegetable oil, or a mixture thereof, e.g. a mixture of a mineral oil and a synthetic oil. Suitable mineral oils include those of appropriate viscosity refined from crude oil of any source including Gulf Coast, Midcontinent, Pennsylvania, California, Alaska, Middle East, North Sea and the like. Standard refinery operations may be used in processing the mineral oil.

Synthetic oils include both hydrocarbon synthetic oils and synthetic esters. Useful synthetic hydrocarbon oils include liquid α-olefin polymers of appropriate viscosity. Especially useful are hydrogenated or unhydrogenated liquid oligomers of $C_6$-$C_{16}$ α-olefins, such as hydrogenated or unhydrogenated α-decene trimer. Alkyl benzenes of appropriate viscosity, e.g. didodecylbenzene, can also be used.

Useful synthetic esters include the esters of monocarboxylic and polycarboxylic acids with monohydroxy alcohols and polyols. Typical examples are didodecyl adipate, trimethylolpropane tripelargonate, pentaerythritol tetracaproate, di-(2-ethylhexyl) adipate, and dilauryl sebacate. Complex esters made from mixtures of mono- and di-carboxylic acids and mono- and/or polyhydric alkanols can also be used.

Typical natural oils that may be used include castor oil, olive oil, peanut oil, rapeseed oil, corn oil, sesame oil, cottonseed oil, soybean oil, sunflower oil, safflower oil, hemp oil, linseed oil, tung oil, oiticica oil, jojoba oil, and the like. Such oils may be partially or fully hydrogenated, if desired.

Viscosity index improvers may be included in the mineral, synthetic and natural oils (or any blends thereof) in order to achieve the viscosity properties deemed necessary or desirable.

The finished lubricating oil compositions and additive concentrates of this invention containing the present antioxidant systems will usually also contain other well-known additives in order to partake of their special properties. Among the numerous additives which can be employed in the lubricants and functional fluids and additive concentrates of this invention are those of the types described hereinbelow.

One preferred type of ancillary additive utilised in the lubricant, functional fluid and additive concentrates of this invention is a basic nitrogen-containing ashless dispersant. Dispersants of this type include hydrocarbyl succinimides, hydrocarbyl succinamides, mixed ester/amides of hydrocarbyl-substituted succinic acids, Mannich condensation products of hydrocarbyl-substituted phenols, formaldehyde and polyamines, and amine dispersants formed by reacting high molecular weight aliphatic or alicyclic halides with amines, such as polyalkylene polyamines. Mixtures of such dispersants can also be used.

Such basic nitrogen-containing ashless dispersants are well known lubricating oil additives, and methods for their preparation are extensively described in the patent literature. For example, hydrocarbyl-substituted succinimides and succinamides and methods for their preparation are described, for example, in U.S. Pat. Nos.

3,018,247; 3,018,250; 3,018,291; 3,172,892; 3,185,704; 3,219,666; 3,272,746; 3,361,673; and 4,234,435. Mixed ester-amides of hydrocarbyl-substituted succinic acid using alkanols, amines, and/or aminoalkanols are described, for example, in U.S. Pat. Nos. 3,576,743 and 4,234,435. Mannich dispersants, which are condensation products of hydrocarbyl-substituted phenols, formaldehyde and polyamines are described, for example, in U.S. Pat. Nos. 3,368,972; 3,413,347; 3,539,633; 3,697,574; 3,725,277; 3,725,480; 3,726,882; 3,798,247; and 3,803,039. Amine dispersants and methods for their production from high molecular weight aliphatic or alicyclic halides and amines are described, for example, in U.S. Pat. Nos. 3,275,554; 3,438,757; 3,454,555; and 3,565,804.

Another type of ashless dispersant which can be used in the practise of this invention comprises the hydrocarbyl substituted succinic acid esters and the hydrocarbyl substituted succinic acid salts. Such well-known additives and their preparation are described in the literature such as for example in U.S. Pat. No. 4,234,435 and references cited therein..

The preferred ashless dispersants are hydrocarbyl succinimides in which the hydrocarbyl substituent is a hydrogenated or unhydrogenated polyolefin group and preferably a polyisobutene group having a number average molecular weight (as measured by gel permeation chromatography) of from 250 to 10,000, and more preferably from 500 to 5,000, and most preferably from 750 to 2,500. The ashless dispersant is most preferably an alkenyl succinimide such as is available commercially from Ethyl Petroleum Additives, Inc. and Ethyl Petroleum Additives, Ltd. as HITEC® 644 and HITEC® 646 additives.

The ashless dispersants which can be used in the compositions of this invention also include ashless dispersants of the types described above which have been subjected to post-treatment with a suitable post-treating reagent. In preparing a post-treated ashless dispersant, any of a wide variety of post-treating agents can be used. Such post-treating agents include, for example, boron oxide, boron oxide hydrate, boron halides, boron acids, esters of boron acids, carbon disulphide, hydrogen sulphide, sulphur, sulphur chloride, alkenyl cyanides, carboxylic acid acylating agents, aldehyde, ketones, urea, thiourea, guanidine, dicyanodiamide, hydrocarbyl phosphates, hydrocarbyl phosphites, hydrocarbyl thiophosphates, hydrocarbyl thiophosphites, phosphorus sulphides, phosphorus oxides, phosphoric acid, phosphorous acid, hydrocarbyl thiocyanates, hydrocarbyl isocyanates, hydrocarbyl isothiocyanates, epoxides, episulphides, formaldehyde or formaldehyde producing compounds plus phenols, sulphur plus phenols, and many others.

Preferred post-treating agents and procedures involve use of phosphorus-containing post-treating agents or boron-containing post-treating agents.

The phosphorus-containing post-treating agents comprise both inorganic and organic compounds capable of reacting with the dispersant in order to introduce phosphorus or phosphorus-containing moieties into the dispersant. Thus use can be made of phosphorus acids, phosphorus oxides, phosphorus sulphides, phosphorus esters, and like compounds. A few examples of such compounds include such inorganic phosphorus compounds as phosphoric acid, phosphorous acid, phosphorus pentoxide, phosphorus pentasulphide, tetraphosphorus heptasulphide, etc., and such organic phosphorus compounds as monohydrocarbyl phosphites, dihydrocarbyl phosphites, trihydrocarbyl phosphites, monohydrocarbyl phosphates, dihydrocarbyl phosphates, trihydrocarbyl phosphates, the hydrocarbyl pyrophosphates, and their partial or total sulphur analogs wherein the hydrocarbyl group(s) contain up to about 30 carbon atoms each.

The boron-containing post-treating agents likewise comprise both inorganic and organic compounds capable of reacting with the dispersant in order to introduce boron or boron-containing moieties into the dispersant. Accordingly, use can be made of such inorganic boron compounds as the boron acids, and the boron oxides, including their hydrates. Typical organic boron compounds include esters of boron acids, such as the orthoborate esters, metaborate esters, biborate esters, pyroboric acid esters, and the like.

It is particularly preferred to utilise an ashless dispersant, most especially a hydrocarbyl-substituted succinimide dispersant, that has been post-treated with a combination of a phosphorus compound and a boron compound so that the product is both phosphorylated and boronated. Such products exhibit enhanced fluoroelastomer compatibility. Examples of inorganic phosphorus acids and anhydrides which are useful in forming the preferred post-treated products used in the practise of this invention include phosphorous acid, phosphoric acid, hypophosphoric acid, phosphorus trioxide ($P_2O_3$), phosphorus tetraoxide ($P_2O_4$), and phosphoric anhydride ($P_2O_5$). Mixtures of two or more such compounds can be used. Most preferred is phosphorous acid ($H_3PO_3$). Illustrative examples of dihy drocarbyl hydrogen phosphites which may be reacted with the basic nitrogen-containing dispersants for the purposes of this invention, include diethyl hydrogen phosphite, dibutyl hydrogen phosphite, di-2-ethylhexyl hydrogen phosphite, didecyl hydrogen phosphite, dicyclohexyl hydrogen phosphite, diphenyl hydrogen phosphite, isopropyl octyl hydrogen phosphite, ditetradecyl hydrogen phosphite, dibenzyl hydrogen phosphite, and the like. Normally the hydrocarbyl groups will each contain up to about 30 carbon atoms. Mixtures of two or more such phosphites can be employed. Dibutyl hydrogen phosphite is a preferred dihydrocarbyl phosphite. Among the monohydrocarbyl phosphites which can be utilised are included such compounds as monomethyl phosphite, monoethyl phosphite, monobutyl phosphite, monohexyl phosphite, monocresyl phosphite, monobenzyl phosphite, monoallyl phosphite, and the like, and mixtures of two or more such compounds. The hydrocarbyl group will normally contain up to about 30 carbon atoms. Mixtures of monohydrocarbyl and dihydrocarbyl phosphites are also suitable, as are the trihydrocarbyl phosphites and the sulphur analogs of the foregoing phosphites. Thus the phosphites may be represented by the formula:

$$(R^1X^1)(R^2X^2)(R^3X^3)P$$

where each of $R^1$, $R^2$, and $R^3$ is, independently, a hydrocarbyl group or a hydrogen atom, where each of $X^1$, $X^2$, and $X^3$ is, independently, an oxygen atom or a sulphur atom, and where at least one of $R^1$, $R^2$, and $R^3$ is a hydrocarbyl group.

The corresponding phosphates and phosphorothioates are also suitable post-treating agents. Such compounds may be represented by the formula

$$(R^1X^1)(R^2X^2)(R^3X^3)P{=}X^4$$

where each of $R^1$, $R^2$, and $R^3$ is, independently, a hydrocarbyl group or a hydrogen atom, where each of $X^1$, $X^2$, $X^3$ and $X^4$ is, independently, an oxygen atom or a sulphur atom, and where at least one of $R^1$, $R^2$, and $R^3$ is a hydrocarbyl group.

A particularly preferred post-treating procedure involves reacting a succinimide dispersant with (a) at least one oxyacid of phosphorus and/or at least one anhydride thereof; or (b) at least one monohydrocarbyl phosphite and/or at least one dihydrocarbyl hydrogen phosphite; or (c) any combination of at least one from (a) and at least one from (b); and sequentially, and most preferably concurrently, with (d) at least one boron compound. In either case -- i.e., where the succinimide is reacted sequentially or concurrently in either order with (a) and (d), (b) and (d), or (c) and (d) -- the reaction is conducted by heating the reactants at a reaction temperature within the range of 50 to 150°C, preferably about 90 to 110°C, most preferably at about 100°C. The over-all reaction time may vary from about 1 hour or less to about 6 hours or more depending on the temperature and the particular reactants employed. In any event, the reactants are heated, preferably with agitation, to produce a clear, oil-soluble product. Such reaction can be carried out in the absence of solvent by mixing and heating the reactants. Preferably, however, water is added to facilitate the initial dissolution of the boron compound. Water formed in the reaction and any added water is then removed by vacuum distillation at temperatures of from 100-140°C. Preferably, the reaction is carried out in a diluent oil or a solvent such as a mixture of aromatic hydrocarbons. One advantage of utilising the combination of a phosphorus-containing post-treating agent and a boron-containing post-treating agent is that in many cases the treatment can be conducted in the presence of other components normally present in the lubricating oil formulations and additive concentrates of this invention.

When a boron compound is reacted sequentially in either order or preferably concurrently with the basic nitrogen-containing dispersant(s) and the phosphorus reactant(s), use can be made of such compounds as, for example, boron acids such as boric acid, boronic acid, tetraboric acid, metaboric acid, pyroboric acid, esters of such acids, such as mono-, di- and tri-organic esters with alcohols having 1 to 20 carbon atoms, e.g., methanol, ethanol, propanol, isopropanol, the butanols, the pentanols, the hexanols, the octanols, the decanols, ethylene glycol, propylene glycol and the like, and boron oxides such as boron oxide and boron oxide hydrate.

Another particularly preferred embodiment of this invention involves use of succinimides that have been subjected to post-treatment with a low molecular weight dicarboxylic acid acylating agent such as maleic anhydride, maleic acid, malic acid, fumaric acid, azelaic acid, adipic acid, succinic acid, alkenyl succinic acids and/or anhydrides (in which the alkenyl group contains up to about 24 carbon atoms), and the like, whereby enhanced fluoroelastomer compatibility can be achieved. Such acylating agents are reacted with the succinimide dispersants at temperatures in the range of 80 to 200°C, more preferably 140 to 180°C. These reactions may be conducted in the presence or absence of an ancillary diluent or liquid reaction medium, such as a mineral oil solvent. If the reaction is conducted in the absence of an ancillary solvent of this type, such is usually added to the reaction product on completion of the reaction. In this way the final product is in the form of a convenient solution in lubricating oil and thus is compatible with a lubricating oil base stock. Suitable solvent oils are the same as the oils used as a lubricating oil base stock and these generally include lubricating oils having a viscosity (ASTM D 445) of 2 to 40, preferably 3 to 12 $mm^2$/sec at 100°C, with the primarily paraffinic mineral oils such as Solvent 100 Neutral being particularly preferred. Other types of lubricating oil base stocks can be used, such as synthetic lubricants including polyesters, poly-$\alpha$-olefins (e.g., hydrogenated or unhydrogenated $\alpha$-olefin oligomers such as hydrogenated poly-1-decene), and the like. Blends of mineral oil and synthetic lubricating oils are also suitable for various applications in accordance with this invention.

It will be appreciated that other types of post-treating agents can be used in forming the post-treated ashless dispersants which can be utilised in the practise of this invention. Since post-treating processes involving numerous post-treating regents are known as regards post-treatment of various ashless dispersants, further details concerning such technology are readily available in the literature. For example, reference may be had

to the following patents for details concerning such prior art post-treating procedures: U.S. Pat. Nos. 3,087,936; 3,184,411; 3,185,645; 3,185,704; 3,200,107; 3,254,025; 3,256,185; 3,278,550; 3,280,034; 3,281,428; 3,282,955; 3,284,410; 3,312,619; 3,338,832; 3,344,069; 3,366,569; 3,367,943; 3,369,021; 3,373,111; 3,390,086; 3,458,530; 3,470,098; 3,502,677; 3,511,780; 3,513,093; 3,541,012; 3,551,466; 3,558,743; 3,573,205; 3,652,616; 3,718,663; 3,749,695; 3,865,740; 3,865,813; 3,954,639; 4,338,205; 4,401,581; 4,410,437; 4,428,849; 4,548,724; 4,554,086; 4,608,185; 4,612,132; 4,614,603; 4,615,826; 4,645,515; 4,710,201; 4,713,191; 4,746,446; 4,747,850; 4,747,963; 4,747,964; 4,747,965; and 4,857,214. See also British Patents 1,085,903 and 1,162,436. Alternatively, pre-treatment procedures such as described in U.S. Pat. Nos. 3,415,750 and 4,713,189 can be used.

Examples 17 through 22 illustrate methods for producing preferred post-treated succinimides which can be used in combination with the antioxidant compositions of this invention. Such post-treated succinimides exhibit, by virtue of the post-treatment, enhanced compatibility with fluoroelastomers.

## EXAMPLE 17

A polyisobutenyl succinimide is formed by reacting a polyisobutenyl succinic anhydride (made from polybutenes having a number average molecular weight of 1300) with a commercially available mixture of polyethylene polyamines composed predominantly of acyclic species and including a minor portion of cyclic species, which mixture has the overall composition approximating that of tetraethylene pentamine. The reactants are employed in a mole ratio of 1.8 moles of polyisobutenyl succinic anhydride per mole of polyethylene polyamines. The reaction is conducted at 165°C until evolution of water ceases. The resultant product is admixed with 100 solvent neutral mineral oil to thereby form an additive pre-blend. To a portion of this pre-blend are added phosphorous acid, boric acid and water in proportions of 250 parts of the succinimide, 100 parts of mineral oil diluent, 8 parts of phosphorous acid, 8 parts of boric acid, and 3 parts of water. The mixture is heated at 100°C for 2 hours until all of the solid materials are dissolved. A vacuum of 40 mm is gradually drawn on the product to remove the water formed while the temperature is slowly raised to 110°C. The resultant succinimide is both phosphorylated and boronated, and thus is especially desirable for use in combination with antioxidant compositions of this invention.

## EXAMPLES 18-22

To five individual portions of the pre-blend of Example 17 are added, respectively, maleic anhydride, maleic acid, fumaric acid, malic acid, and adipic acid in amounts corresponding to 1.3 moles thereof per mole of polyethylene polyamines used in the syntheses of Example 17. The resultant mixtures are heated at 165-170°C for 1.5 hours to produce post-treated acylated succinimide products. Such products are especially useful when used in combination with antioxidant compositions of this invention.

Ashless dispersants are usually employed in the finished oleaginous fluids in amounts falling within the range of 0.1 to 20 percent by weight.

Other well known additives which may be included in the compositions of this invention are the zinc dialkyl ($C_3$-$C_{10}$), dicycloalkyl ($C_5$-$C_{20}$), and/or diaryl ($C_6$-$C_{20}$) dithiophosphate wear inhibitors, generally present in amounts of about 0.5 to 5 weight percent. Useful detergents include the oil-soluble normal basic or overbased metal, e.g., calcium, magnesium, barium, etc., salts of petroleum naphthenic acids, petroleum sulfonic acids, alkyl benzene sulfonic acids, oil-soluble fatty acids, alkyl salicylic acids, sulphurised or unsulphurised alkyl phenates, and hydrolysed or unhydrolysed phosphosulphurised polyolefins. Gasoline engine crankcase lubricants typically contain, for example, from 0.5 to 5 weight percent of one or more detergent additives. Diesel engine crankcase oils may contain substantially higher levels of detergent additives. Preferred detergents are the calcium and magnesium normal or overbased phenates, sulphurised phenates or sulfonates.

Pour point depressants which may be present in amounts of from 0.01 to 1 weight percent include wax alkylated aromatic hydrocarbons, olefin polymers and copolymers, and acrylate and methacrylate polymers and copolymers.

Viscosity index improvers, the concentrations of which may vary in the lubricants from 0.2 to 15 weight percent, (preferably from about 0.5 to about 5 weight percent) depending on the viscosity grade required, include hydrocarbon polymers grafted with, for example, nitrogen-containing monomers, olefin polymers such as polybutene, ethylene-propylene copolymers, hydrogenated polymers and copolymers and terpolymers of styrene with isoprene and/or butadiene, polymers of alkyl acrylates or alkyl methacrylates, copolymers of alkyl methacrylates with N-vinyl pyrrolidone or dimethylaminoalkyl methacrylate, post-grafted polymers of ethylene-propylene with an active monomer such as maleic anhydride which may be further reacted with an alcohol or an alkylene polyamine, styrene/maleic anhydride polymers post-treated with alcohols and amines, etc.

Antiwear activity can be provided by about 0.01 to 2 weight percent in the oil of the aforementioned metal dihydrocarbyl dithiophosphates and the corresponding precursor esters, phosphosulphurised pinenes, sulphurised olefins and hydrocarbons, sulphurised fatty esters and alkyl polysulphides. Preferred are the zinc dihydrocarbyl dithiophosphates which are salts of dihydrocarbyl esters of dithiophosphoric acids.

Other additives include effective amounts of friction modifiers or fuel economy additives such as the alkyl phosphonates as disclosed in U.S. 4,356,097, aliphatic hydrocarbyl substituted succinimides as disclosed in EPO 0020037, dimer acid esters, as disclosed in U.S. 4,105,571, oleamide, etc., which are present in the oil in amounts of 0.1 to 5 weight percent. Glycerol oleates are another example of fuel economy additives and these are usually present in very small amounts, such as 0.05 to 0.2 weight percent based on the weight of the formulated oil.

Additional antioxidants or thermal stabilisers may be included, if desired. These include sulphurised phenols, alkyl phenothiazines, substituted triazines and ureas, and copper compounds such as copper naphthenate and copper oleate, among others.

Other well known components such as rust inhibitors, wax modifiers, foam inhibitors, copper passivators, sulphur scavengers, seal swell agents, color stabilisers, and like materials can be included in the compositions of this invention, provided of course that they are compatible with the antioxidant system of this invention and the other component or components being employed.

The antioxidant compositions of this invention can be employed in various fuel compositions, such as gasolines, diesel fuels, burner fuels, gas oils, bunker fuels, and similar products, as well as in polymers, resins, and plastics.

This invention also includes among its embodiments improved methods of lubricating mechanical parts in the presence of at least one fluoroelastomer surface. In the practise of such methods, the lubrication is effected by means of a lubricating oil or functional fluid containing an antioxidant combination of this invention. The practise of such methods results in a lower -- oftentimes a substantially lower -- amount of degradation of the fluoroelastomer contacted by the lubricating oil or functional fluid containing such antioxidant combinations as compared to the amount of degradation that would occur under the same conditions using the same oil or fluid composition containing the same total quantity of antioxidant but in which the amount of secondary aromatic amine is substantially higher. At the same time, the practise of such methods results in the protection of the lubricating oil or functional fluid composition against premature oxidative deterioration or degradation.

In another of its forms this invention provides in combination, (a) a mechanical mechanism containing moving parts to be lubricated, (b) a lubricating oil or functional fluid composition for lubricating such parts, and (c) a fluoroelastomer in contact with at least a portion of such lubricating oil or functional fluid during operation of such mechanism, characterised in that the lubricating oil or functional fluid composition for effecting such lubrication contains an antioxidant combination of this invention. Here again, such utilisation of this invention results in improvements in fluoroelastomer compatibility and protection against premature oxidative deterioration or degradation, especially under actual service conditions. Among the mechanical mechanisms and systems lubricated in this manner are the crankcases of internal combustion engines; vehicular transmissions; hydraulic systems; hypoid axles; mechanical steering drives in passenger cars, in trucks, and in cross-country vehicles; planetary hub reduction axles and transfer gear boxes in utility vehicles such as trucks; pinion hub reduction gear boxes; synchromesh and synchroniser type gear boxes; power take-off gears; and limited slip rear axles. The antioxidant combinations can also be utilised in metal working, machining, and cutting oils such as are applied to work pieces during cutting and shaping operations.

## Claims

1. An antioxidant composition which comprises a combination of (i) at least one oil-soluble mononuclear monohydric phenol having a tertiary alkyl group in at least one position ortho to the hydroxyl group and a hydrogen atom or a tertiary alkyl group in the position para to the hydroxyl group, (ii) at least one oil-soluble methylene-bridged tertiary alkyl-substituted polyphenol, and (iii) at least one oil-soluble aromatic secondary amine, the proportions of (i), (ii) and (iii) being such that the weight percentage of nitrogen in component (iii) relative to the total weight of components (i), (ii) and (iii) is in the range of 0.1% to 0.8%, and the weight ratio of monohydric phenols:methylene-bridged polyphenols in the composition is in the range of 15:1 to 1:2.

2. An antioxidant composition as claimed in Claim 1 wherein component (i) is an oil-soluble mixture of said mononuclear monohydric phenols.

3. An antioxidant composition as claimed in Claim 1 wherein component (ii) is an oil-soluble mixture of said methylene-bridged tertiary alkyl-substituted phenols.

4. A composition as claimed in any one of claims 1 through 3 wherein the proportions of (i), (ii) and (iii) are such that the weight ratio of monohydric phenol or phenols:methylene-bridged polyphenol or polyphenols in the composition is in the range of 10:1 to 1:1.

5. A composition as claimed in any of Claims 1 through 3 wherein the proportions of (i), (ii) and (iii) are such that the weight percentage of nitrogen in component (iii) relative to the total weight of components (i), (ii) and (iii) is in the range of 0.3% to 0.7%, and the weight ratio of monohydric phenol or phenols:methylene-bridged polyphenol or polyphenols in the composition is in the range of 5:1 to 1:1.

6. A composition as claimed in any of Claims 1 through 5 wherein component (i) consists essentially of a mixture of at least three different sterically-hindered tertiary butyl phenols which is in the liquid state at 25°C.

7. A composition as claimed in any of Claims 1 to 6 wherein component (ii) consists essentially of a mixture of at least three different sterically-hindered tertiary butyl polyphenols of the type formed by reacting a mixture composed principally of 2-tert-butylphenol and 2,6-di-tert-butylphenol with formaldehyde or a formaldehyde-generating reagent in the presence of a strong inorganic base.

8. A composition as claimed in any of Claims 1 through 7 wherein component (iii) consists essentially of diphenylamine or one or more oil-soluble ring-alkylated diphenylamines or a mixture of diphenylamine and one or more oil-soluble ring-alkylated diphenylamines.

9. A composition as claimed in any of claims 1 to 7 wherein component (iii) is at least one bis(4-alkylphenyl)-amine wherein the alkyl group is branched alkyl group having 8 to 12 carbon atoms, and the proportions of (i), (ii) and (iii) on a weight basis fall in the range of 3.5 to 5.0 parts of component (i) and 0.9 to 1.2 parts of component (ii) per part by weight of component (iii).

10. A lubricating oil or functional fluid composition containing a minor antioxidant quantity of an antioxidant combination as claimed in any of claims 1 through 9.

11. A composition as claimed in claim 10 additionally containing at least one ashless dispersant.

12. A composition as claimed in claim 11 wherein said ashless dispersant is a nitrogen-containing ashless dispersant.

13. A composition as claimed in claim 10, 11 or 12 in the form of an additive concentrate.

14. A composition as claimed in claim 10, 11 or 12 which is oleaginous and comprises a major proportion of at least one oil of lubricating viscosity.

15. A method of lubricating mechanical parts with a lubricating oil containing an antioxidant in the presence of at least one fluoroelastomer surface, said method characterized in that the lubrication is performed with a lubricating oil as claimed in claim 14.

## Patentansprüche

1. Antioxidationszusammensetzung, die eine Kombination aus (i) mindestens einem öllöslichen einkernigen Phenol mit einer Hydroxylgruppe, das eine tertiäre Alkylgruppe in mindestens einer ortho-Stellung zur Hydroxylgruppe und ein Wasserstoffatom oder eine tertiäre Alkylgruppe in para-Stellung zur Hydroxylgruppe aufweist, (ii) mindestens einem öllöslichen tertiären alkylsubstituierten Polyphenol mit Methylenbrücken und (iii) mindestens einem öllöslichen aromatischen sekundären Amin umfassen, wobei die Verhältnisse von (i), (ii) und (iii) so beschaffen sind, daß der Gewichtsprozentsatz von Stickstoff in Komponente (iii) bezogen auf das Gesamtgewicht der Komponenten (i), (ii) und (iii) im Bereich von 0,1 % bis 0,8 % und das Gewichtsverhältnis zwischen den Phenolen mit einer Hydroxylgruppe zu den Polyphenolen mit Methylenbrücken in der Zusammensetzung im Bereich von 15 : 1 bis 1 : 2 liegt.

2. Antioxidationszusammensetzung nach Anspruch 1, in der die Komponente (i) eine öllösliche Mischung aus den einkernigen Phenolen mit einer Hydroxylgruppe ist.

3. Antioxidationszusammensetzung nach Anspruch 1, in der die Komponente (ii) eine öllösliche Mischung aus den tertiären alkylsubstituierten Phenolen mit Methylenbrücken ist.

4. Zusammensetzung nach einem der Ansprüche 1 bis 3, in der die Verhältnisse von (i), (ii) und (iii) so beschaffen sind, daß das Gewichtsverhältnis des Phenols bzw. der Phenole mit einer Hydroxylgruppe zum Polyphenol bzw. den Polyphenolen mit Methylenbrücken in der Zusammensetzung im Bereich von 10 : 1 bis 1 : 1 liegt.

5. Zusammensetzung nach einem der Ansprüche 1 bis 3, in der die Verhältnisse von (i), (ii) und (iii) so beschaffen sind, daß der Gewichtsprozentsatz von Stickstoff in der Komponente (iii) bezogen auf das Gesamtgewicht der Komponenten (i), (ii) und (iii) im Bereich von 0,3 % bis 0,7 % liegt und das Gewichtsverhältnis des Phenols bzw. der Phenole mit einer Hydroxylgruppe zum Polyphenol bzw. den Polyphenolen mit Methylenbrücken in der Zusammensetzung im Bereich von 5 : 1 bis 1 : 1 liegt.

6. Zusammensetzung nach einem der Ansprüche 1 bis 5, in der die Komponente (i) im wesentlichen aus einer Mischung aus mindestens drei verschiedenen sterisch gehinderten tertiären Butylphenolen besteht, die sich bei 25°C im flüssigen Zustand befindet.

7. Zusammensetzung nach einem der Ansprüche 1 bis 6, in der die Komponente (ii) im wesentlichen aus einer Mischung aus mindestens drei verschiedenen sterisch gehinderten tertiären Butylphenolen des Typs besteht, der durch Umsetzung einer im wesentlichen aus 2-tert-Butylphenol und 2,6-Di-tert-butylphenol zusammengesetzten Mischung mit Formaldehyd oder einem Reagens, das Formaldehyd erzeugt, in Gegenwart einer starken anorganischen Base gebildet wird.

8. Zusammensetzung nach einem der Ansprüche 1 bis 7, in der die Komponente (iii) im wesentlichen aus Diphenylamin oder einem oder mehreren öllöslichen, ringalkylierten Diphenylaminen oder einer Mischung aus Diphenylamin und einem oder mehreren öllöslichen ringalkylierten Diphenylaminen besteht.

9. Zusammensetzung nach einem der Ansprüche 1 bis 7, in der die Komponente (iii) mindestens ein Bis(4-alkylphenyl)amin ist, in dem die Alkylgruppe verzweigt ist und 8 bis 12 Kohlenstoffatome aufweist, und in der die Verhältnisse von (i), (ii) und (iii) bezogen auf das Gewicht in den Bereich von 3,5 bis 5,0 Teilen der Komponente (i) und 0,9 bis 1,2 Teilen der Komponente (ii) pro Gewichtsteil der Komponente (iii) fallen.

10. Schmieröl oder funktionelle Fluidzusammensetzung, die eine kleinere Antioxidansmenge einer wie in den Ansprüchen 1 bis 9 beanspruchten Antioxidanskombination enthält.

11. Zusammensetzung nach Anspruch 10, die außerdem mindestens ein aschefreies Dispergiermittel enthält.

12. Zusammensetzung nach Anspruch 11, in der das aschefreie Dispergiermittel ein stickstoffhaltiges aschefreies Dispergiermittel ist.

13. Zusammensetzung nach Anspruch 10, 11 oder 12 in Form eines Zusatzstoffkonzentrats.

14. Zusammensetzung nach Anspruch 10, 11 oder 12, die ölig ist und ein größeren Anteil mindestens eines Öls von Schmierviskosität enthält.

15. Verfahren zum Schmieren mechanischer Teile mit einem Schmieröl enthaltend ein Antioxidationsmittel in Gegenwart mindestens einer Fluorelastomeroberfläche, das dadurch gekennzeichnet ist, daß die Schmierung mit einem Schmieröl nach Anspruch 14 durchgeführt wird.

## Revendications

1. Composition d'antioxydant, qui comprend une association (i) d'au moins un phénol monohydroxylique monocyclique soluble dans l'huile, ayant un groupe tertio-alkyle dans au moins une position ortho par rapport au groupe hydroxyle et un atome d'hydrogène ou un groupe tertio-alkyle en position para du groupe hydroxyle, (ii) d'au moins un polyphénol à substituant tertio-alkyle et à pontage méthylène, soluble dans l'huile, et (iii) d'au moins une amine secondaire aromatique soluble dans l'huile, les proportions de (i), (ii) et (iii) etant telles que le pourcentage en poids d'azote dans le constituant (iii) par rapport au poids total des constituants (i), (ii) et (iii) soit compris dans l'intervalle de 0,1 % à 0,8 %, et que le rapport pondéral phénols monohydroxyliques:polyphénols à pontage méthylène dans la composition soit compris dans l'intervalle de 15:1 à 1:2.

**2.** Composition d'antioxydant suivant la revendication 1, dans laquelle le constituant (i) est un mélange, soluble dans l'huile, des phénols monohydroxyliques monocycliques.

**3.** Composition d'antioxydant suivant la revendication 1, dans laquelle le constituant (ii) est un mélange, soluble dans l'huile, des phénols à substituant tertio-alkyle et pontage méthylène.

**4.** Composition suivant l'une quelconque des revendications 1 à 3, dans laquelle les proportions des constituants (i), (ii) et (iii) sont telles que le rapport pondéral phénol ou phénols monohydroxyliques:polyphénol ou polyphénols à pontage méthylène dans la composition soit compris dans l'intervalle de 10:1 à 1:1.

**5.** Composition suivant l'une quelconque des revendications 1 à 3, dans laquelle les proportions des constituants (i), (ii) et (iii) sont telles que le pourcentage en poids d'azote dans le constituant (iii) par rapport au poids total des constituants (i), (ii) et (iii) soit compris dans l'intervalle de 0,3 % à 0,7 %, et que le rapport pondéral phénol ou phénols monohydroxyliques:polyphénol ou polyphénols à pontage méthylène dans la composition soit compris dans l'intervalle de 5:1 à 1:1.

**6.** Composition suivant l'une quelconque des revendications 1 à 5, dans laquelle le constituant (i) consiste essentiellement en un mélange d'au moins trois tertio-butylphénols à encombrement stérique différents, qui est à l'état liquide à 25°C.

**7.** Composition suivant l'une quelconque des revendications 1 à 6, dans laquelle le constituant (ii) consiste essentiellement en un mélange d'au moins trois tertio-butylpolyphénols à encombrement stérique différents du type formé par réaction d'un mélange constitué principalement de 2-tertio-butylphénol et de 2,6-di-tertio-butylphénol avec le formaldéhyde ou un réactif engendrant du formaldéhyde en présence d'une base inorganique forte.

**8.** Composition suivant l'une quelconque des revendications 1 à 7, dans laquelle le constituant (iii) consiste essentiellement en diphénylamine, ou une ou plusieurs diphénylamines alkylées sur le noyau, solubles dans l'huile, ou bien un mélange de diphénylamine et d'une ou plusieurs diphénylamines alkylées sur le noyau, solubles dans l'huile.

**9.** Composition suivant l'une quelconque des revendications 1 à 7, dans laquelle le constituant (iii) consiste en au moins une bis-(4-alkylphényl)-amine dans laquelle le groupe alkyle est un groupe alkyle ramifié ayant 8 à 12 atomes de carbone, et les proportions des constituants (i), (ii) et (iii), sur base pondérale, sont comprises dans l'intervalle de 3,5 à 5,0 parties de constituant (i) et de 0,9 à 1,2 partie de constituant (ii) par partie en poids de constituant (iii).

**10.** Composition d'huile lubrifiante ou de fluide fonctionnel contenant une petite quantité à effet antioxydant d'une composition d'antioxydant suivant l'une quelconque des revendications 1 à 9.

**11.** Composition suivant la revendication 10, contenant en outre au moins un dispersant sans cendres.

**12.** Composition suivant la revendication 11, dans laquelle le dispersant sans cendres est un dispersant sans cendres contenant de l'azote.

**13.** Composition suivant la revendication 10, 11 ou 12, sous forme d'un concentré d'additif.

**14.** Composition suivant la revendication 10, 11 ou 12, qui est huileuse et comprend une proportion dominante d'au moins une huile de viscosité propre à la lubrification.

**15.** Procédé pour lubrifier des pièces mécaniques avec une huile lubrifiante contenant un antioxydant en présence d'au moins une surface d'un élastomère fluoré, ledit procédé étant caractérisé en ce que la lubrification est effectuée avec une huile lubrifiante suivant la revendication 14.